# EUROPEAN PATENT APPLICATION

(11) **EP 2 431 880 A1**
(43) Date of publication of application: **21.03.2012**
(21) Application number: 10774741.2
(22) Date of filing: 14.05.2010
(51) Int. Cl.: G06F 12/00, H04M 3/42, H04W 8/20

(54) **DATABASE DEVICE, DATABASE MATCHING SYSTEM, AND DATABASE MATCHING METHOD**

(30) Priority: 14.05.2009 JP 2009117313
(71) Applicant: NTT DOCOMO, INC., Chiyoda-ku Tokyo 100-6150 (JP)
(72) Inventor: FUKASAWA, Kenichi, Tokyo 100-6150 (JP); SAKURAI, Wataru, Tokyo 100-6150 (JP); IWASHINA, Shigeru, Tokyo 100-6150 (JP); AKIYAMA, Daisuke, Tokyo 100-6150 (JP)
(74) Representative: Henseler, Daniela
(86) International application number: PCT/JP2010/003276
(87) International publication number: WO 2010/131482

(57) **Abstract**

There are provided a database apparatus for maintaining a consistency with another database apparatus having a different database key from a database key of the database apparatus, a database consistency system, and a database consistency method. A data collating unit in HLR collates data stored in a database of HLR and data stored in EIR with respect to "telephone number" and "terminal equipment number". When it is determined by collating that there is an inconsistency between the data, a data deleting unit deletes such inconsistent data, a data collecting unit collects mobile station information from MS. A database updating unit updates the database by use of the collected mobile station information. A collected data notifying unit notifies the collected mobile station information to EIR.

## Description

### Technical Field

The present invention relates to a database apparatus for detecting and restoring a data inconsistency with another database apparatus, a database consistency system, and a database consistency method.

### Background Art

Conventionally, in a case where multiple database apparatuses are deployed on a communication network in order to improve processing speeds thereof, control signals cannot be normally transmitted or received between the database apparatuses due to a failure or the like of a database apparatus. This leads to an occurrence of unmatched items between data stored in the database apparatuses, in some cases.
For instance, in a mobile communication network, a Home Location Register (HLR) and an Equipment Identity Register (EIR) are deployed each serving as a database apparatus for managing mobile station information.

The HLR manages subscriber data of mobile communication service subscriber. The subscriber data managed by the HLR includes a database key for a telephone number (MSISDN : Mobile Station International ISDN Number) of a mobile telephone (MS : Mobile Station, hereinafter referred to as "MS"). The subscriber data includes mobile station information and location information. The mobile station information includes a telephone number of a MS and its terminal equipment number (IMEI: International Mobile Equipment Identifier).

On the other hand, EIR also manages the mobile station information, which includes the terminal equipment number of an MS as a database key. That is, the HLR and EIR each have a different database key, but manage the mobile station information of an identical content.
Each MS stores a terminal equipment number assigned to the MS to uniquely identify the terminal equipment of the MS. A telephone number is recorded in a Subscriber Identity Module (SIM) to be inserted into the MS. The insertion of the SIM into the MS enables the MS to make outgoing and incoming calls with the use of the telephone number recorded in the SIM.

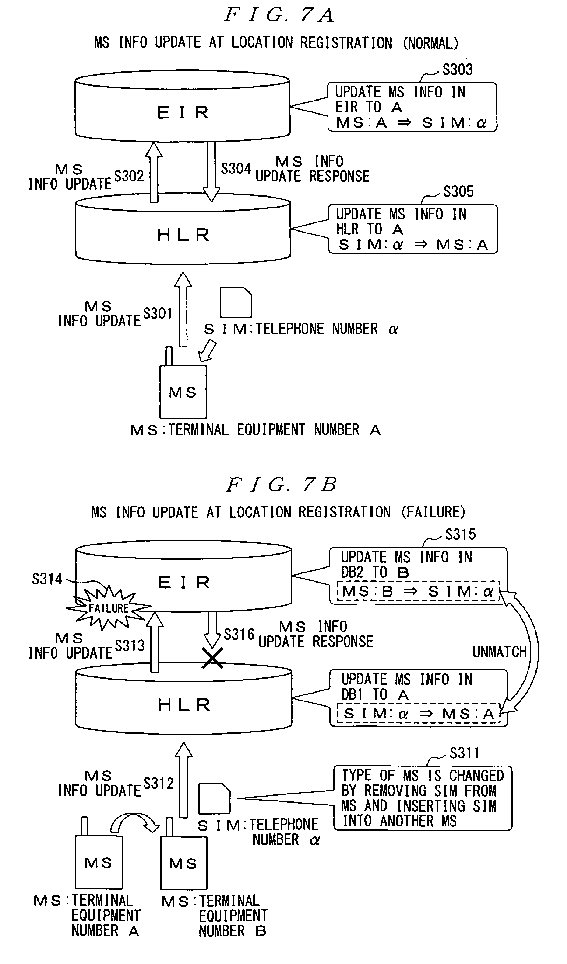

FIG. 7A is a view showing an operation of a mobile station information updating process at the time of location registration.
In this case, it is assumed that a terminal equipment number "A" is stored in an MS and a SIM in which a telephone number "α" is recorded for the MS is inserted into the MS.
The MS transmits a mobile station information update signal including the terminal equipment number "A" and the telephone number "α" to the HLR (at step S301). The HLR transfers the received mobile station information update signal to the EIR (step S302). The EIR that has received the mobile station information update signal updates the telephone number to "α" corresponding to the terminal equipment number "A" as the database key (step S303). Then, the EIR replies a mobile station information updating response to the HLR (step S304). The HLR that has received the mobile station information updating response updates the terminal equipment number "A" corresponding to the telephone number to "α" as the database key. This maintains the consistency between the mobile station information in the HLR and that in the EIR.

Subsequently, referring to FIG. 7B, a description will be given of an operation when a failure occurs at the EIR while the mobile station information updating process is being performed after the type of a mobile station is changed.
A SIM in which the telephone number "α" is recorded is removed from the MS having the terminal equipment number "A" assigned thereto, and is then inserted into another MS having a terminal equipment number "B" assigned thereto. Accordingly, when the type of the terminal equipment is changed to the MS having the terminal equipment number "B" assigned thereto (step S311), the MS having the terminal equipment number "B" assigned thereto transmits to the HLR the mobile station information update signal including the terminal equipment number "B" and the telephone number "α" at the time of location registration (step S312). The HLR then transfers the received mobile station information update signal to the EIR (step S313). In this process, it is assumed that a communication failure occurs at the EIR (step S314). The EIR updates the telephone number to "α" corresponding to the terminal equipment number "B" as the database key (step S315).

The EIR replies the mobile station information updating response to the HLR (step S316), but a communication failure occurs at the EIR. Therefore, in the HLR, the terminal equipment number remains "A" corresponding to the telephone number "α". This results in unmatched items between the mobile station information stored in HLR and that stored in EIR.
As described, there is a problem in that no consideration is given to the consistency at the time of updating the mobile station information in multiple DBs, although it is made possible to change the type of mobile station with ease by inserting the SIM to another MS.
Under the current situations, a collation function at the time of data input is installed for the data input into a database from the exterior. Nevertheless, a maintenance operator mainly maintains data manually for maintenance after the data is stored. It should be noted, however, that if the databases have different database keys, data sequences or data structures are different from each other. This will take a lot of labor for collating data consistency.

As a technique of automatically collating the data consistency, Patent Document 1 describes that even if the contents in databases are different from each other, the respective databases are associated with each other by use of database key common to both databases so as to detect an error at the database update. Additionally, Patent Document 2 describes that in multiple subscriber databases, synchronization of activation information corresponding to the identity numbers is established with the identity number of a communication terminal used as the database key.

### Prior Art Documents

### Patent Documents

Patent Document 1: JP H08-44604 A
Patent Document 2: JP 2002-159072 A

### Summary of the Invention

### Problem to be Solved

Patent Documents 1 and 2, however, describe that the data consistency is maintained, if there is the common database key, but does not describe that the data consistency is maintained, if the database key is different from each other. Accordingly, the data consistency between the databases having different database keys cannot be maintained even with the utilization of the techniques described in Patent Documents 1 and 2.
The present invention has been made to solve the above problem, and has an object of providing a database apparatus, a database consistency system, and a database consistency method, capable of maintaining a database consistency between databases having different database keys.

### Solution to the Problem

In order to solve the above problem, the present invention proposes a database apparatus, a database consistency system, and a database consistency method to be listed below.
(1) There is provided a database apparatus for maintaining a consistency with another database apparatus having a different database key from the database key of the database apparatus, the database apparatus comprising:
   a data collating unit for collating data stored in a database of the database apparatus and data stored in another database of said another database apparatus with respect to corresponding data items;
   a data collecting unit for, when the data collating unit determines that there is an inconsistency between the data stored in the database of the database apparatus and the data stored in said another database of said another database apparatus, collecting data to be stored in its own database of the database apparatus and said another database of said another database apparatus;
   a database updating unit for updating the database of the database apparatus by use of the data collected by the data collecting unit; and
   a collected data notifying unit for notifying said another database apparatus having said another database of the data to update said another database by use of the data collected by the data collecting unit.

In the database apparatus of (1), the database apparatus collates data stored in its own database and data stored in another database with respect to corresponding data items, when it is determined that there is an inconsistency between the data stored in its own database and the data stored in another database, collects data to be stored in the database and another database, updates its own database by use of the collected data, and notifies another database apparatus having another database of the data. It is thus possible to automatically maintain the consistency between databases having different database keys.

(2) According to the database apparatus of (1), the data may be for managing a mobile station, and the data collecting unit collects the data from the mobile station.
In the database apparatus of (2), it is possible to provide mobile stations with a mobile communication service in a mobile communication network without a defect.

(3) There is provided database apparatus for maintaining a consistency with another database apparatus having a different database key from that of the database apparatus, the database apparatus comprising:
a data collating unit for collating data stored in a database of the database apparatus and data stored in another database of said another database apparatus with respect to corresponding data items;
a data collecting unit for, when the data collating unit determines that there is an inconsistency between the data stored in the database of the database apparatus and the data stored in said another database of said another database apparatus, requesting said another database apparatus having said another database to collect data to be stored in the database of the database apparatus and said another database of said another database apparatus; and
a database updating unit for updating the database of the database apparatus by use of the data collected by the data collecting unit.

In the above database apparatus of (3), the database apparatus collates data stored in its own database and data stored in another database with respect to corresponding data items, when it is determined that there is an inconsistency between the data stored in its own database and the data stored in another database, collects data to be stored in its own database and another database, updates its own database by use of the collected data, and notifies another database apparatus having another database of the data. It is thus possible to automatically maintain the consistency between databases having different database keys.

(4) According to the database apparatus of (3), the data may be for managing a mobile station, and the data collecting unit collects the data through said another database apparatus having said another database from the mobile station.
In the database apparatus of (4), it is possible to provide mobile stations with a mobile communication service in a mobile communication network without a defect.

(5) According to the database apparatus of (1) or (3), the database apparatus may further comprise a data deleting unit for, when the data collating unit determines that there is a data inconsistency, deletes the data stored in the database of the database apparatus.
In the database apparatus of (5), the data is deleted when it is determined that there is a data inconsistency. This eliminates the possibility of inconsistent data is referred to. It is therefore possible to prevent a malfunction caused by referring to the inconsistent data.

(6) There is provided a database consistency system for maintaining a consistency between a plurality of databases each having a different database key, the database consistency system comprising:
a data collating unit for collating data stored in the plurality of databases with respect to corresponding data items;
a data collecting unit for, when the data collating unit determines that there is an inconsistency between the data stored in the plurality of databases, collecting data to be stored in the plurality of databases; and
a database updating unit for updating the plurality of databases by use of the data collected by the data collecting unit.

In the above database consistency system of (6), the database apparatus collates data stored in its own database and data stored in another database with respect to corresponding data items, when it is determined that there is an inconsistency between the data stored in its own database and the data stored in another database, collects data to be stored in its own database and another database, updates its own database by use of the collected data, and notifies another database apparatus having another database of the data. It is thus possible to automatically maintain the consistency between databases having different database keys.

(7) There is provided a database consistency method for maintaining a consistency between a first database apparatus and a second database apparatus each having different a database key, the database consistency method comprising:
a collation signal transmitting step, by the first database apparatus, of transmitting a database collation signal stored in a first database of the first database apparatus to the second database apparatus;
a data collating step, by the second database apparatus, of collating data stored in a second database of the second database apparatus against the data transmitted at the collation signal transmitting step with respect to corresponding data items;
a collation result notifying step, by the second database apparatus, of notifying the first database apparatus of a collation result of the data collating step;
a data collecting step of, when the first database apparatus determines that there is an inconsistency between data stored in the first database of the first database apparatus and data stored in the second database of the second database apparatus based upon the collation result notified at the collation result notifying step, collecting data to be stored in the first and second databases;
a collected data notifying step, by the first database apparatus, of notifying the second database apparatus of the data collected at the data collecting step; and
a second database updating step, by the second database apparatus, of updating the second database of the second database apparatus by use of the data notified at the collected data notifying step; and
a first database updating step, by the first database apparatus, of updating the first database by use of the data collected at the collected data notifying step, after updating at the second database updating step.
In the database consistency method of (7), it is possible to maintain the consistency of the databases in the first database apparatus and the second database apparatus, when the first database apparatus transmits a database collation signal to the second database apparatus.

(8) There is provided a database consistency method for maintaining a consistency between a first database apparatus and a second database apparatus, each having different a database key, the database consistency method comprising:
a collation signal transmitting step, by the second database apparatus, of transmitting a database collation signal stored in a second database of the second database apparatus to the first database apparatus;
a data collating step, by the first database apparatus, of collating data stored in the first database of the first database apparatus against the data transmitted at the collation signal transmitting step with respect to corresponding data items;
a collation result notifying step, by the first database apparatus, of notifying the second database apparatus of a collation result of the data collating step;
a data collecting step of, when the second database apparatus determines that there is an inconsistency between data stored in the second database of the second database apparatus and data stored in the first database of the first database apparatus based upon the collation result notified at the collation result notifying step, collecting data to be stored in the first and second databases;
a collected data notifying step, by the first database apparatus, of notifying the second database apparatus of the data collected at the data collecting step;
a collected data notifying step, by the first database apparatus, of notifying the second database apparatus of the data collected at the collected data notifying step;
a second database updating step, by the second database apparatus, of updating the second database of the second database apparatus by use of the data notified at the collected data notifying step; and
a first database updating step, by the first database apparatus, of updating the first database by use of the data collected at the collected data notifying step, after updating at the second database updating step.
In the database consistency method of (8), it is possible to maintain the consistency of the databases in the first database apparatus and the second database apparatus, when the second database apparatus transmits a database collation signal to the first database apparatus.

### Advantageous Effects of the Invention

According to the present invention, the database apparatus collates data stored in its own database and data stored in another database with respect to corresponding data items, and when it is determined that there is an inconsistency between the data stored in its own database and the data stored in another database, collects data to be stored in its own database and another database, updates its own database by use of the collected data, and notifies another database apparatus having another database of the collected data. It is thus possible to automatically maintain the consistency between databases having different database keys.

### Brief Description of the Drawings

FIG. 1 is a block diagram illustrative of the whole system configuration of a mobile communication system according to an embodiment of the present invention;
FIG. 2 is a block diagram illustrative of a functional configuration of an HLR according to the embodiment;
FIG. 3 is a block diagram illustrative of a functional configuration of an EIR according to the embodiment;
FIG. 4 is a view illustrative of an outline of a database consistency process according to the embodiment;
FIG. 5 is a sequence chart illustrative of a database consistency process in a case where a database collation signal is transmitted to the EIR from the HLR according to the embodiment;
FIG. 6 is a sequence chart illustrative of a database consistency process in a case where a database collation signal is transmitted to the HLR from the EIR according to the embodiment;
FIG. 7A is a view illustrative of an operation of a conventional mobile station information updating process at the time of location registration; and
FIG. 7B is a view illustrative of an operation when a failure occurs at the mobile station information updating process after the type of the mobile station is changed.

### Description of Embodiments

Hereinafter, embodiments of the present invention will be described with reference to drawings. In each of the drawings referred to in the description below, the same components have the same reference numerals in each of the drawings.

### (Entire System Configuration)

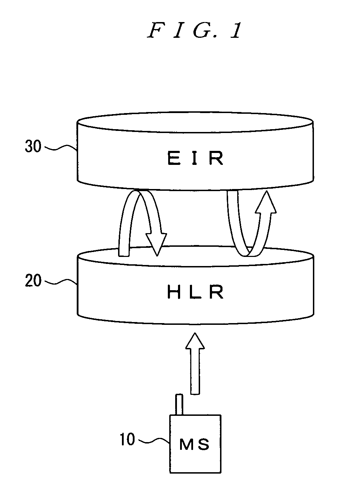

FIG. 1 is a view of an entire configuration of a mobile communication system according to an embodiment of the present invention. The mobile communication system according to the present embodiment includes: a Mobile Station (MS) 10; a Home Location Register (HLR) 20; and an Equipment Identity Register (EIR) 30. The above apparatuses included in the mobile communication system are communication apparatuses, each of which includes a Central Processing Unit (CPU) for controlling the entire apparatus, a Random Access Memory (RAM) for storing various types of software, a Read Only Memory (ROM), a memory device including a hard disk and the like, and a communication interface for controlling communication.

A terminal equipment number for managing the terminal equipment number of the MS 10 is stored in the MS 10. The insertion of a SIM in which a telephone number is recorded into the MS 10 allows the MS 10 to make outgoing and incoming calls by use of the telephone number.
The HLR 20 is a database apparatus for managing subscriber data of mobile communication service subscriber in a database. The subscriber data is data having a subscriber's telephone number as the database key, and includes mobile station information and location information, the mobile station information including the telephone number and the terminal equipment number.

The EIR 30 is a database apparatus for managing the terminal equipment number of the MS 10 in a database. The EIR 30 manages the mobile terminal information including the terminal equipment number and the telephone number with the terminal equipment number of the MS 10 as the database key.
That is, the HLR 20 and the EIR 30 each manage identical mobile station information with a different database key.
In the present embodiment, it is supposed that the HLR 20 has a higher priority (reliability) in data update than that of the EIR 30.

### (HLR Configuration)

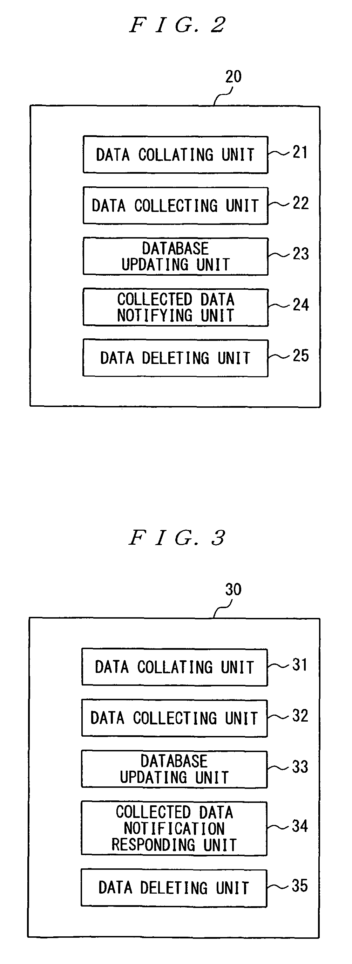

FIG. 2 is a block diagram illustrative of a functional configuration of the HLR 20. Referring to FIG. 2, the HLR 20 is provided with: a data collating unit 21; a data collecting unit 22; a database updating unit 23; a collected data notifying unit 24; and a data deleting unit 25.
The data collating unit 21 transmits a DB collation signal to the EIR 30, or receives the DB collation signal from the EIR 30, so that the mobile station information stored in the database of the HLR 20 is collated with the mobile station information stored in the EIR 30 with respect to corresponding data items. In the present embodiment, within the mobile station information, the "telephone number" is collated with "terminal equipment number".

When the data collation unit 21 determines that there is an inconsistency between the mobile station information stored in the database of the HLR 20 and the mobile station information stored in the EIR 30, the data collecting unit 22 collects the mobile station information to be stored in the database of the HLR 20 and the EIR 30, from the MS 10.
The database updating unit 23 updates the database of the HLR 20 with the mobile station information collected by the data collecting unit 22.
The collected data notifying unit 24 notifies the EIR 30 of the mobile station information collected by the data collecting unit 22 to update the EIR 30 with the collected mobile station information.
When the data collating unit 21 determines that there is an inconsistency in the mobile station information, the data deleting unit 25 deletes the mobile station information so that the mobile station information with an inconsistency should not be referred to and led to a false operation.

### (EIR Configuration)

FIG. 3 is a block diagram illustrative of a functional configuration of the EIR 30. Referring to FIG. 3, the EIR 30 is provided with: a data collating unit 31; a data collecting unit 32; a database updating unit 33; a collected data notification responding unit 34; and a data deleting unit 35.
The data collating unit 31 transmits a DB collation signal to the HLR 20, or receives the DB collation signal from the HLR 20, so that the mobile station information stored in the database of the EIR 30 is collated with the mobile station information stored in the HLR 20 with respect to corresponding data items.

When the data collating unit 21 determines that there is an inconsistency between the mobile station information stored in the database of the EIR 30 and the mobile station information stored in the EIR 30, the data collecting unit 32 requests the HLR 20 to collect the mobile station information to be stored in the database of the EIR 30 and the HLR 20, from the MS 10.
The database updating unit 33 updates the database of the EIR 30 with the mobile station information collected by the data collecting unit 22.
The collected data notification responding unit 34 notifies the HLR 20 of a mobile station information updating response to update the HLR 20 with the mobile station information collected by the data collecting unit 32.
When the data collating unit 31 determines that there is an inconsistency in the mobile station information, the data deleting unit 35 deletes the mobile station information so that the mobile station information with an inconsistency should not be referred to and led to a false operation.

### (Outline of consistency Process)

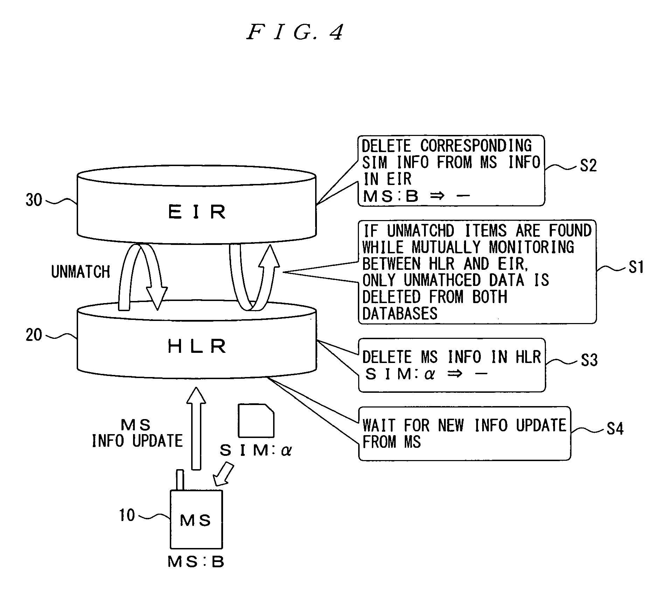

Referring now to FIG. 4, a description will be given of the outline of the consistency process in the database in the above-described mobile communication system.
The mobile station information stored in the databases is mutually monitored between the HLR 20 and the EIR 30. When unmatched items are found at the mobile station information as shown in FIG. 7B, the data deleting unit 25 of the HLR 20 and the data deleting unit 35 of the EIR 30 each delete only the unmatched items in the databases (step S1). Specifically, the data deleting unit 35 of the EIR 30 deletes SIM information stored in association with the terminal equipment number "B" that is the database key (step S2).

The data deleting unit 25 of the HLR 20 deletes the terminal equipment number stored in association with the telephone number "α" that is the database key (step S3).
The data collecting unit 22 of the HLR 20 waits for information update from the MS 10 (step S4).
This allows the HLR 20 and the EIR 30 to update the correct mobile station information acquired from the MS 10 to maintain the consistency between the databases.

### (Database consistency Process When HLR Transmits Database Collation Signal to EIR)

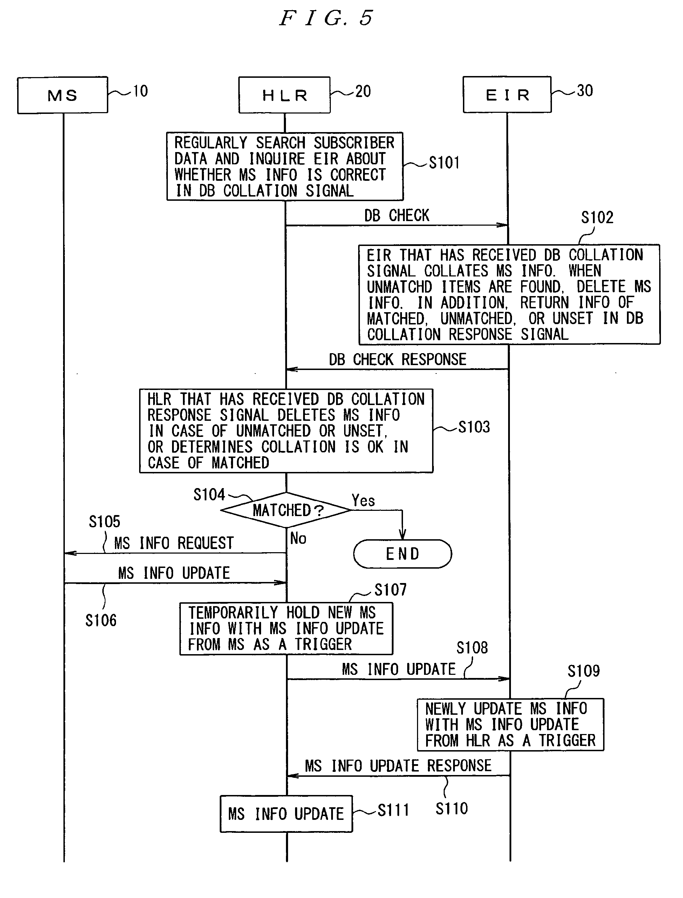

Referring now to a sequence chart illustrated in FIG. 5, a description will be given of a database consistency process when the HLR 20 transmits the database collation signal to the EIR 30.
The HLR 20 regularly searches for the subscriber data stored in the database thereof. Then, the data collation unit 21 of the HLR 20 inquires to the EIR 30 with the use of the DB collation signal as to whether each piece of the mobile station information in the subscriber data is correct (step S101).

The data collating unit 31 of the EIR 30 that has received the DB collation signal collates the mobile station information included in the DB collation signal with the mobile station information included in the database of the EIR 30, and determines whether there is a matched combination of the "telephone number" and the "terminal equipment number" included in the mobile station information. When there are unmatched items, the data deleting unit 35 of the EIR 30 deletes the mobile station information. In addition, the EIR 30 returns information of matched, unmatched, or unset to the HLR 20 in a DB collation response signal (step S102).

Upon receipt of the DB collation response signal, the data collating unit 21 of the HLR 20 determines matched, unmatched, or unset mobile station information based upon the DB collation response signal received from the EIR 30. When unmatched or unset is determined, the data deleting unit 25 deletes the mobile station information. When matched is determined, collation OK is determined (step S103).
When matched is determined (step S104: Yes), the processing ends.

When unmatched or unset is determined (step S104: No), the data collecting unit 22 of the HLR 20 requests the MS 10 for the mobile station information (step S105).
Upon receipt of the request for the mobile station information from the HLR 20, the MS 10 replies the mobile station information update signal including the mobile station information (step S106).
The HLR 20 temporarily holds new mobile station information that has been received, with the reception of the mobile station information update signal from the MS 10 as a trigger (step S107).

Next, the collected data notifying unit 24 of the HLR 20 transmits the mobile station information update signal including the mobile station information received from the MS 10 to the EIR 30 (step S108).
The database updating unit 33 of the EIR 30 updates the mobile station information of the database of the EIR 30 with the new mobile station information that has been received, with the reception of the mobile station information update signal as a trigger (step S109).
The collected data notification responding unit 34 of the EIR 30 replies the mobile station information updating response to the HLR 20 (step S110).
The database updating unit 23 of the HLR 20 updates the mobile station information of the database of the HLR 20 with the new mobile station information temporarily held (step S111).

### (Database consistency Process When EIR Transmits Database Collation Signal to HLR)

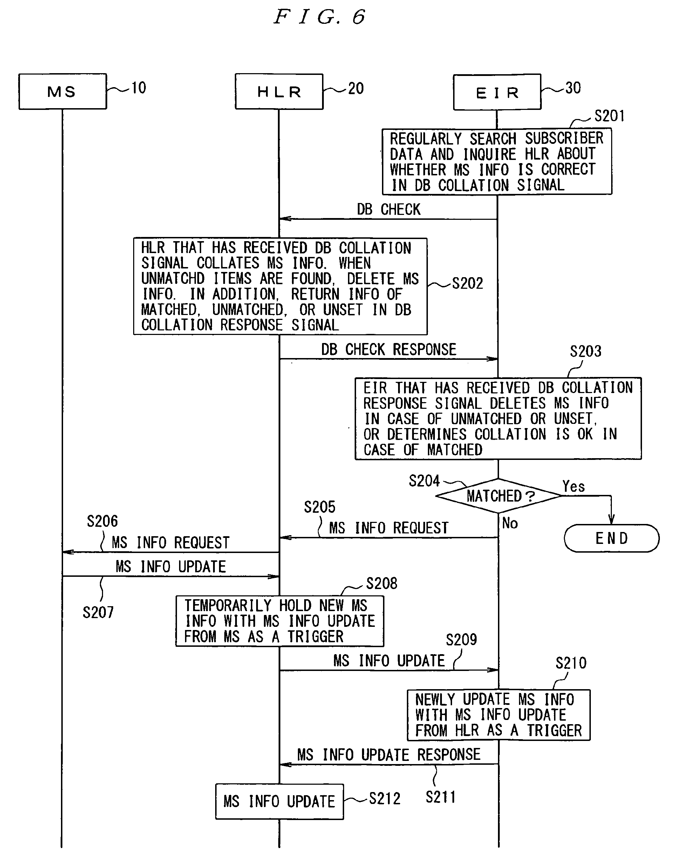

Referring now to a sequence chart illustrated in FIG. 6, a description will be given of a database consistency process when the EIR 30 transmits the database collation signal to the HLR 20.
The EIR 30 regularly searches for the mobile station information stored in the database thereof.
Then, the data collating unit 31 of the EIR 30 inquires to the HLR 20 with the use of the DB collation signal as to whether each piece of the mobile station information in the subscriber data is correct (step S201).

The data collating unit 31 of the HLR 20 that has received the DB collation signal collates the mobile station information included in the DB collation signal with the mobile station information included in the database of the HLR 20, and determines whether there is a matched combination of the "telephone number" and "terminal equipment number" included in the mobile station information. When there is an inconsistency, the data deleting unit 25 of the HLR 20 deletes the mobile station information. In addition, the HLR 20 returns information of matched, unmatched, or unset to the EIR 30 in the DB collation response signal (step S202).

Upon receipt of the DB collation response signal, the data collating unit 31 of the EIR 30 determines matched, unmatched, or unset of the mobile station information based upon the DB collation response signal received from the HLR 20. When unmatched or unset is determined, the data deleting unit 35 deletes the mobile station information. When matched is determined, collation OK is determined (step S203).
When matched is determined (step S204: Yes), the processing ends. When unmatched or unset is determined (step S204: No), the data collecting unit 32 of the EIR 30 requests the MS 10 for correct mobile station information through the HLR 20 (step S205, step S206).

Upon receipt of the request for the mobile station information, the MS 10 replies to the HLR 20 the mobile station information update signal including the mobile station information (step S207).
The HLR 20 temporarily holds the mobile station information in the database of the HLR 20 with the new mobile station information that has been received, with the reception of the mobile station information update signal from the MS 10 as a trigger (step S208).
Then, the collected data notifying unit 24 of the HLR 20 transmits to the EIR 30 the mobile station information update signal including the mobile station information received from the MS 10 (step S209).

The database updating unit 33 of the EIR 30 updates the mobile station information in the database of the EIR 30 with the new mobile station information that has been received, with the reception of the mobile station information update signal as a trigger (step S210).
The collected data notification responding unit 34 of the EIR 30 replies to the HLR 20 the mobile station information updating response (step S211).
The database updating unit 23 of the HLR 20 updates the mobile station information in the database of the HLR 20 with the new mobile station information temporarily held (step S212).

As described heretofore, in the HLR 20 and the EIR 30 each storing a database with a different database key, the HLR 20 having a higher priority in the data update collates the mobile station information stored in the database of the HLR 20 with the mobile station information stored in the EIR 30 by use of a combination of the "telephone number" and the "terminal equipment number". When determining that there is an inconsistency in the mobile station information, the HLR 20 collects the mobile station information to be stored in the database in the HLR 20 and the EIR 30, from the MS 10. The HLR 20 temporarily holds the mobile station information in the database of the HLR 20 by use of the collected mobile station information, notifies the EIR 30 of the collected mobile station information to update the database in the EIR 30, and then updates the database in the HLR 20. With this processing, it is possible to automatically maintain the consistency of the databases having different database keys.

In addition, the EIR 30 having a lower priority in the data update than the HLR 20 collates the mobile station information stored in the database of the EIR 30 with the mobile station information stored in the HLR 20 by use of a combination of the "telephone number" and the "terminal equipment number". When determining that there is an inconsistency in the mobile station information, the EIR 30 requests the HLR 20 to collect the correct mobile station information from the MS 10, and updates the database in the HLR 20 with the mobile station information notified from the HLR 20, after the database update is completed in the HLR 20. It is thus possible to automatically maintain the consistency of the databases having different database keys.

In this manner, the maintenance of the databases can be automated, thereby reducing the work of the maintenance operator. In addition, the maintenance of the database is conducted regularly, thereby significantly reducing a possibility of an occurrence of a failure resulting from a database inconsistency. Furthermore, it is possible to establish the data with a high priority (reliability) at the end.

Moreover, since the data is deleted when the data inconsistency is determined, the inconsistent data is not be referred to any longer. This prevents a false operation caused by the reference to the inconsistent data.
In the above embodiment, the description has been given to the consistency process between databases, each of which has the "telephone number" and the "mobile station number" as database keys. The present invention, however, is not limited to this. The present invention is applicable to another database with a key other than the telephone number or the mobile station number.

In addition, data stored in the database is not limited to the mobile station information, and the present invention is applicable to a consistency process of the databases each storing any type of data. Furthermore, the present invention is not limited to a mobile communication network, and is applicable to the consistency process of the databases in any system.
Moreover, in the above-described embodiment, a description has been given of the consistency process for two databases. However, the number of the databases is not limited to two. There may be three or more databases. Also in this case, the priority (reliability) of the database update is determined to update the databases successively from a higher priority, so that the maintenance of the databases can be automated.

### Reference Signs List

- 10: MS
- 20: HLR
- 21: data collating unit
- 22: data collecting unit
- 23: database updating unit
- 24: collected data notifying unit
- 25: data deleting unit
- 30: EIR
- 31: data collating unit
- 32: data collecting unit
- 33: database updating unit
- 34: collected data notification responding unit
- 35: data deleting unit

## Claims

1. A database apparatus for maintaining a consistency with another database apparatus having a different database key from a database key of the database apparatus, the database apparatus comprising:
a data collating unit for collating data stored in a database of the database apparatus with data stored in another database of said another database apparatus with respect to corresponding data items;
a data collecting unit for, when the data collating unit determines that there is an inconsistency between the data stored in the database of the database apparatus and the data stored in said another database of said another database apparatus, collecting data to be stored in the database of the database apparatus and said another database of said another database apparatus;
a database updating unit for updating the database of the database apparatus by use of the data collected by the data collecting unit; and
a collected data notifying unit for notifying said another database apparatus having said another database of the data to update said another database by use of the data collected by the data collecting unit.

2. The database apparatus according to claim 1, wherein the data is for managing a mobile station, and the data collecting unit collects the data from the mobile station.

3. A database apparatus for maintaining a consistency with another database apparatus having a different database key from a database key of the database apparatus, the database apparatus comprising:
a data collating unit for collating data stored in a database of the database apparatus with data stored in another database of said another database apparatus with respect to corresponding data items;
a data collecting unit for, when the data collating unit determines that there is an inconsistency between the data stored in the database of the database apparatus and the data stored in said another database of said another database apparatus, requesting said another database apparatus having said another database to collect data to be stored in the database of the database apparatus and said another database of said another database apparatus; and
a database updating unit for updating the database of the database apparatus by use of the data collected by the data collecting unit.

4. The database apparatus according to claim 3, wherein the data is for managing a mobile station, and the data collecting unit collects the data through said another database apparatus having said another database from the mobile station.

5. The database apparatus according to claim 1 or claim 3, further comprising a data deleting unit for, when the data collating unit determines that there is a data inconsistency, deletes the data stored in the database of the database apparatus.

6. A database consistency system for maintaining a consistency between a plurality of databases each having different database keys, the database consistency system comprising:
a data collating unit for collating data stored in the plurality of databases with respect to corresponding data items;
a data collecting unit for, when the data collating unit determines that there is an inconsistency between the data stored in the plurality of databases, collecting data to be stored in the plurality of databases; and
a database updating unit for updating the plurality of databases by use of the data collected by the data collecting unit.

7. A database consistency method for maintaining a consistency between a first database apparatus and a second database apparatus each having different database keys, the database consistency method comprising:
a collation signal transmitting step, by the first database apparatus, of transmitting a database collating signal stored in a first database of the first database apparatus to the second database apparatus;
a data collating step, by the second database apparatus, of collating data stored in a second database of the second database apparatus with the data transmitted at the collation signal transmitting step with respect to corresponding data items;
a collation result notifying step, by the second database apparatus, of notifying the first database apparatus of a collation result of the data collating step;
a data collecting step of, when the first database apparatus determines that there is an inconsistency between data stored in the first database of the first database apparatus and data stored in the second database of the second database apparatus based upon the collation result notified at the collation result notifying step, collecting data to be stored in the first and second databases;
a collected data notifying step, by the first database apparatus, of notifying the second database apparatus of the data collected at the data collecting step;
a second database updating step, by the second database apparatus, of updating the second database of the second database apparatus by use of the data notified at the collected data notifying step; and
a first database updating step, by the first database apparatus, of updating the first database by use of the data collected at the collected data notifying step, after updating at the second database updating step.

8. A database consistency method for maintaining a consistency between a first database apparatus and a second database apparatus, each having a different database key, the database consistency method comprising:
a collation signal transmitting step, by the second database apparatus, of transmitting a database collation signal stored in a second database of the second database apparatus to the first database apparatus;
a data collating step, by the first database apparatus, of collating data stored in the first database of the first database apparatus with the data transmitted at the collation signal transmitting step with respect to corresponding data items;
a collation result notifying step, by the first database apparatus, of notifying the second database apparatus of a collation result of the data collating step;
a data collecting step of, when the second database apparatus determines that there is an inconsistency between data stored in the second database of the second database apparatus and data stored in the first database of the first database apparatus based upon the collation result notified at the collation result notifying step, collecting data to be stored in the first and second databases;
a collected data notifying step, by the first database apparatus, of notifying the second database apparatus of the data collected at the data collecting step;
a collected data notifying step, by the first database apparatus, of notifying the second database apparatus of the data collected at the collected data notifying step;
a second database updating step, by the second database apparatus, of updating the second database of the second database apparatus by use of the data notified at the collected data notifying step; and
a first database updating step, by the first database apparatus, of updating the first database by use of the data collected at the collected data notifying step, after updating at the second database updating step.
